# EUROPEAN PATENT SPECIFICATION

(11) **EP 1 280 653 B1**
(45) Date of publication and mention of the grant of the patent: **20.10.2004**
(21) Application number: 01933171.9
(22) Date of filing: 08.05.2001
(51) Int. Cl.: B29C 65/14, B29C 65/20

(54) **FIXTURE FOR IR WELDING**
ANBAU ZUM INFRAROTSCHWEISSEN
INSERT POUR SOUDAGE INFRAROUGE

(30) Priority: 10.05.2000 US 567603
(43) Date of publication of application: 05.02.2003
(73) Proprietor: Swagelok Company, Cleveland, OH 44139 (US)
(72) Inventor: EVANS, Glenn, A., Highland Heights, OH 44143 (US)
(74) Representative: Neill, Alastair William
(86) International application number: PCT/US2001/014755
(87) International publication number: WO 2001/085436

(56) References cited:
- WO-A-00/43190
- WO-A-90/00970
- WO-A-99/37467
- DD-A- 129 758
- GB-A- 2 304 072
- US-A- 3 754 456
- US-A- 4 913 772
- US-A- 4 927 642
- US-A- 5 628 859
- PATENT ABSTRACTS OF JAPAN vol. 1996, no. 08, 30 August 1996 (1996-08-30) -& JP 08 108479 A (SEKISUI CHEM CO LTD), 30 April 1996 (1996-04-30)

## Description

### Technical Field of the Invention

The subject invention relates generally to welding or joining non-metallic fluoropolymer parts together. More particularly, the invention relates to a fixture according to claim 1.

### Background of the Invention

A known technique for welding or joining plastic parts or workpieces together is radiant heating, sometimes called infrared or IR welding. In a known process, the workpieces are heated and then pressed together and allowed to cool. A heater is used to provide a radiant heat source that is held close to those portions of the workpieces that are to be joined together.

Numerous deficiencies are present in known IR welding systems. Among them are the poor repeatability, inconsistency of the welds and long weld cycle times. This can be attributed to a number of factors, many of which are related to the fact that the welding operator must visually determine when each work piece has to be sufficiently heated. With Teflon™ type materials such as PFA, for example, the operator looks for a change in the opacity of the workpiece. This is a very subjective determination and results in inconsistent welds.

Known systems are only useful for welding two workpieces of the same material, and only materials such as PFA that are melt processable. Melt processable refers to materials that can be melted and further processed such as by injection molding or other processing technique in which the molten material flows. Materials that are not melt processable are not believed to have been IR welded heretofore using known IR systems. Another significant limitation of known systems is that there is very little control over how much of the workpiece is heated. For a typical welding operation, usually only a small part of the workpiece requires heating. Known systems however heat portions of the workpiece other than the actual weld site. Still further, known welding systems typically use fixtures to hold the workpieces during the welding and cool down time periods. These fixtures typically axially constrain movement of the workpieces during cool down, thus producing residual stresses in the weld.

WO900970 discloses the joining of thermoplastic parts by application of heat to selected surface areas thereof and pushing together of the parts. US 5628859 discloses a method of welding by electromagnetic radiation to enable components made of plastics to be joined together. JP 8108479 relates to a butt welding device for thermoplastic resin tubing. GB 2304072 discloses a method and apparatus for joining polyolefin articles by fusion bonding.

The need continues to exist for a radiant welding method and apparatus for welding plastic parts together to produce high quality repeatable welds. Such method and apparatus will be particularly but not exclusively suited for welding two workpieces of different material together that have different melting and decomposition temperatures.

### Summary of the Invention

According to the present invention there is provided a fixture for a workpiece being welded by infrared heat, the fixture comprising: a base; a member extending from said base and adapted to engage said workpiece; said member radially aligning said workpiece and axially holding said workpiece prior to heat being applied to said workpiece; the workpiece being axially unconstrained on said member after the workpiece has been heated as part of a welding operation.

In accordance with an aspect of the invention, the workpieces to be welded are mounted on fixtures that facilitate the formation of acceptable welds. In accordance with this aspect of the invention, at least one of the workpieces is permitted to displace axially and freely relative to the other workpiece during a post-weld period of time. This free movement allows the weld site to cool without producing residual stresses at the weld site. In one embodiment of the invention, a fixture is used that holds a workpiece during a part of the welding operation and axially releases the workpiece during a welding and cool down period.

These and other aspects and advantages of the present invention will be readily appreciated and understood from the following detailed description of the invention in view of the accompany drawings.

### Brief Description of the Drawings

Figs. 8A-8C illustrate a first embodiment of a fixture concept in accordance with the present invention; and
Figs. 9A-9D illustrate a second embodiment of a fixture concept in accordance with the invention.

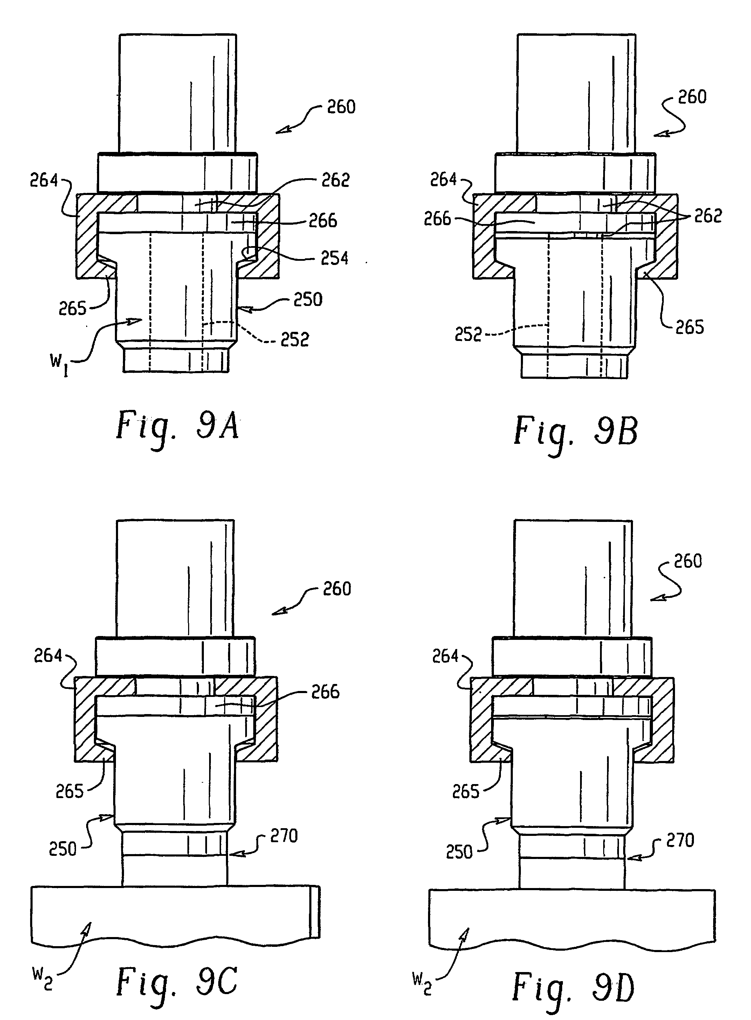

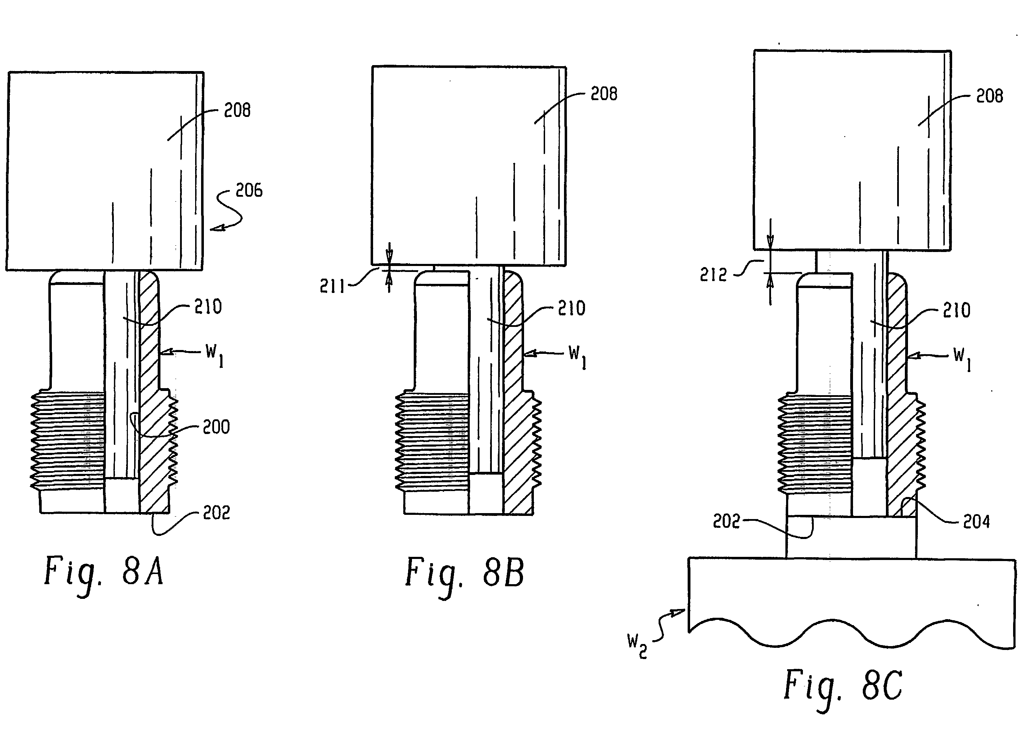

The present invention relates to a fixture concept as illustrated by Figures 8A-8C and 9A-9D.

### Detailed Description of the Invention

The present invention relates to a fixture concept as illustrated by Figures 8A-8C and 9A-9D.

Although the invention is described herein with specific reference to welding a PFA part to a modified PTFE part (i.e. a melt processable material to a non-melt processable material), these are but two examples of fluoropolymers that may be welded using apparatus and methods that embody the present invention. The present invention may also be used to weld two parts of the same material together (e.g. a part made of a melt processable material, such as PFA, to a melt processable part, or a part made of a non-melt processable material, such as a modified PTFE, to a non-melt processable part).

Although the invention is described herein by away of exemplary embodiments for welding two workpieces of different materials, those of ordinary skill in the art will readily understand that various aspects of the invention may be used for welding workpieces together of the same material.

Additionally, while a number of alternative embodiments or examples are presented herein, such examples are not intended to be and should not be construed as being an exhaustive list. Many different electrical, mechanical and materials variations to the described embodiments will be readily apparent to those skilled in the art, whether explicitly stated herein or not, and such variations may be made without departing from the spirit and scope of the invention.

Reference herein to "welding" should be understood in its broadest sense, i.e. joining or uniting two workpieces by the application of heat. The invention is directed to radiant or IR heating techniques by convection of heat from a radiant surface to the workpiece without direct contact of the workpiece with the heat radiant surface. This assures a clean weld.

With reference to Figs. 8A-8C, the invention contemplates fixturing concepts that improve final weld quality and strength by substantially reducing applied forces and residual stresses at the weld. In accordance with this, at least one of the workpieces is mounted on a fixture such that as the weld cools, the workpiece is axially free to move relative to the fixture. This allows the weld to cool without axial constraint or residual stress.

In the exemplary embodiment of Figs. 8A-8C, a first workpiece W₁, in this example a threaded fitting tube end, is to be welded to a second workpiece W₂ such as a valve. The drawings are simplified for clarity and show only the workpieces and one of the fixtures. In this example, the valve W₂ is the moveable workpiece.

The concept embodied in Figs. 8A-8C relates to a tubular workpiece having a central bore 200 therethrough. The lower end 202 (as viewed in the drawings) of the workpiece W₁ is the end that will be welded to a corresponding tube end 204 on the other workpiece. These ends 202, 204 define the weld site. The fixture 202 in this case is the movable fixture that allows the workpieces to be joined (as described herein before with reference to Figs. 3A-3G).

In this example, the central bore 200 is not a true cylinder but rather has a slight axial taper because the part is a molded part. The fixture concept however may also be applied to workpieces that are not tapered or molded. The fixture 206 includes a base 208 that is installed on a suitable support (not shown). The base 208 is moveable by a suitable actuator. Extending from the base 208 is a fixture mount or pin 210. The pin 210 is appropriately sized so as to have a slight interference or frictional fit with the workpiece bore 200 before the workpiece is heated as part of a welding operation.

In Fig. 8A the workpiece W₁ is mounted on the fixture 210 prior to heating and is snugly held on the pin 210. In Fig. 8B the workpiece has been heated as part of a welding operation. During the heating time period, the workpiece "grows" so as to have a substantially reduced grip on the pin 210, but with enough residual gripping force such that the workpiece does not fall off the pin 210. The reduced frictional interference between the workpiece and the fixture 206 decreases to the point that the fitting is able to slide along the pin 210 during cooling of the formed weld. After the workpieces have reached their respective welding temperature, the parts are joined and the fixture and pin 210 are held in position. In Fig. 8C, during cool down (for example from about 400°C to about 270°C) the fixture 206 is held in position as the weld cools. Since the frictional fit has been substantially removed, the shrinkage that occurs due to the weld cooling pulls on the workpiece which is now free to axially slide along the pin 210. Those skilled in the art will appreciate that the movement described is rather small but significant. If the workpiece were not free to slide along the pin 210, residual stresses would form in the weld. The workpiece is removed from the pin 210 before complete cool down, otherwise the workpiece would return to its original dimensions and be snugly retained on the pin 210. This complete cool down may be used however when required. The slight axial displacement of the workpiece along the pin 210 is exaggerated as the gap 212 in Fig. 8C for clarity. The workpiece W₁ is still radially aligned during cool down, but is axially unconstrained so that he weld can cool with little or no residual stress.

With reference to Figs 9A-9D, an alternative embodiment of the fixturing concept is illustrated. This embodiment is useful for parts such as a standard ISO tube end fitting 250 that has a substantially cylindrical inner bore 252. The ISO fitting is the movable workpiece W₁ and in this example is being welded to a valve body W₂.

A standard ISO fitting is characterized by a radially outward extending flange 254. The fixture 260 is configured to loosely capture the fitting 250 and hold it in radial alignment via a pin 262 that extends into the central bore 252 of the fitting. The fixture 260 includes a collar 264 that radially captures the fitting 250 and has an inward extending flange 265 that axially catches the fitting flange 254. Fig. 9A shows initial setup with the fitting 250 installed in the fixture 260. A slight interference fit with the pin 262 may be used if required. The fitting 250 is axially unconstrained but supported within the fixture 260. In Fig. 9B the workpieces have been heated and in Fig. 9C, the workpieces have been joined. When the fitting 250 is heated, it no longer has an interference fit with the pin 262. As shown in Fig. 9C, when the weld joint 270 is made, the workpiece 250 has been pushed up against a stop 266 in the fixture 260. As the weld 270 cools, the fitting 250 is axially free to back away and is axially unconstrained while at the same time still being radially aligned. Thus, in accordance with the invention, the fixtures allow the welds to cool with at least one of the joined workpieces being axially unconstrained.

The exemplary embodiments of Figs. 8A-8C and 9A-9D have specific structural features that are used due to the specific fitting design or geometry being welded. These embodiments should not be construed in a limiting sense. The salient feature is that at least one of the workpieces is supported during the heating step, but is axially unconstrained during the post-weld cool down step to eliminate residual stresses.

The invention has been described with reference to the preferred embodiment. Modifications and alterations will occur to others upon a reading and understanding of this specification. It is intended to include all such modifications and alterations insofar as they come within the scope of the appended claims.

## Claims

1. A fixture (206) for a workpiece (W₁) being welded by infrared heat, the fixture comprising:
a base (208);
a member extending from said base and adapted to engage said workpiece (W₁); said member radially aligning said workpiece (W₁) and axially holding said workpiece (W₁) prior to heat being applied to said workpiece (W₁);
the workpiece (W₁) being axially unconstrained on said member after the workpiece (W₁) has been heated as part of a welding operation.

2. The fixture (206) of claim 1 wherein said member comprises a pin (210) that has an interference fit with the workpiece (W₁) prior to the workpiece (W₁) being heated.

3. The fixture (206) of claim 1 wherein said member comprises a collar (264) that captures a corresponding flange (254) on the workpiece (W₁).

## Patentansprüche

1. Haltevorrichtung (206) für ein Werkstück (W₁), das mit Infrarotwärme geschweißt wird, wobei die Haltevorrichtung umfasst:
eine Basis (208);
ein Element, das sich von der Basis aus erstreckt und so eingerichtet ist, dass es mit dem Werkstück (W₁) in Eingriff kommt, wobei das Element das Werkstück (W₁) radial ausrichtet und das Werkstück (W₁) axial hält, bevor mit Wärme auf das Werkstück (W₁) eingewirkt wird;
das Werkstück (W₁) an dem Element axial nicht festgehalten wird, nachdem das Werkstück (W₁) als Teil eines Schweißvorgangs erhitzt worden ist.

2. Haltevorrichtung (206) nach Anspruch 1, wobei das Element einen Bolzen (210) umfasst, der mit dem Werkstück (W₁) in Presspassung verbunden ist, bevor das Werkstück (W₁) erhitzt wird.

3. Haltevorrichtung (206) nach Anspruch 1, wobei das Element eine Hülse (264) umfasst, die einen entsprechenden Flansch (254) an dem Werkstück (W₁) einschließt.

## Revendications

1. Monture (206) pour une pièce (W₁) soudée par chauffage aux rayons infrarouges, la monture comprenant:
une base (208);
un élément s'étendant à partir de ladite base et adapté pour venir en prise avec ladite pièce (W₁); ledit élément alignant ladite pièce (W1) radialement et la maintenant axialement préalablement à l'application de chaleur à celle-ci;
la pièce (W₁) n'étant plus retenue axialement sur ledit élément après avoir été soumise à un chauffage faisant partie d'une opération de soudage.

2. Monture (206) selon la revendication 1, dans laquelle ledit élément comprend un axe (210) qui s'assemble par un ajustement serré avec la pièce (W₁) préalablement au chauffage de celle-ci.

3. Monture (206) selon la revendication 1, dans laquelle ledit élément comprend un collier (264) qui retient prisonnier un rebord (254) correspondant prévu sur la pièce (W₁).
